# EUROPEAN PATENT APPLICATION

(11) **EP 4 835 043 A1**
(43) Date of publication of application: **04.11.2026**
(21) Application number: 24912955.2
(22) Date of filing: 25.12.2024
(51) Int. Cl.: C11C 3/10

(54) **PRODUCTION METHOD FOR TRANSESTERIFIED OIL/FAT**

(30) Priority: 26.12.2023 JP 2023220066; 26.12.2023 JP 2023220067
(71) Applicant: Kao Corporation, Tokyo 103-8210 (JP)
(72) Inventor: KASE, Minoru, Tokyo 103-8210 (JP)
(74) Representative: Hoffmann Eitle
(86) International application number: PCT/JP2024/046044
(87) International publication number: WO 2025/143069

(57) **Abstract**

Provided is a method of producing a transesterified fat or oil rich in diacylglycerols with few by-products without changing the composition of glycerides in a reaction oil. The method of producing a transesterified fat or oil includes: subjecting a fat or oil, and glycerin to a transesterification reaction; subsequently performing treatment of reducing the glycerin dissolved in the reaction oil; and then performing treatment of bringing an adsorbent into contact with a deglycerinized oil.

## Description

### Field of the Invention

The present invention relates to a method of producing a transesterified fat or oil rich in diacylglycerols.

### Background of the Invention

Diacylglycerols have been utilized in various industrial fields, such as food and a cosmetic.

In general, diacylglycerols are each produced by a method, such as an esterification reaction between glycerin and a fatty acid, or a glycerolysis reaction (transesterification reaction) between glycerin, and a fat or oil. Those production methods are broadly classified into: a chemical method involving using a chemical catalyst, such as a hydroxide or an alkoxide of an alkali metal or an alkaline earth metal; and an enzymatic method involving using an enzyme such as a lipase. Diacylglycerols after the esterification reaction or the transesterification reaction are each subjected to decoloration by adding activated clay or the like, or deodorization by being brought into contact with steam under high temperature and reduced pressure, in order to make its quality suitable for food (e.g., Patent Documents 1 to 3). Patent Document 3 discloses that a fat or oil with a small amount of a glycidol fatty acid ester as a by-product is obtained by performing treatment of bringing steam into contact with a fat or oil obtained by subjecting a fatty acid and glycerin to an esterification reaction, and subsequently performing treatment of bringing an adsorbent such as activated clay into contact therewith.

(Patent Document 1) JP-A-2005-504862
(Patent Document 2) JP-A-2020-172576
(Patent Document 3) JP-A-2011-195621

### Summary of the Invention

The present invention provides a method of producing a transesterified fat or oil, the method comprising: subjecting a fat or oil, and glycerin to a transesterification reaction; subsequently performing treatment of reducing the glycerin dissolved in a reaction oil; and then performing treatment of bringing an adsorbent into contact with a deglycerinized oil.

### Detailed Description of the Invention

However, it found that even when the treatment of bringing an adsorbent such as activated clay into contact with a transesterification reaction oil (hereinafter also simply referred to as "reaction oil") was performed, by-products were sufficiently reduced in some cases. Accordingly, a reduction of by-products was desired. Meanwhile, the reaction oil contains triacylglycerols and monoacylglycerols in addition to diacylglycerols. It is desired that the composition of glycerides in the reaction oil be maintained in order to effectively utilize physiological effects of the diacylglycerols and the monoacylglycerols.

Accordingly, the present invention relates to provide a method of producing a transesterified fat or oil rich in diacylglycerols with few by-products without changing the composition of glycerides in a reaction oil.

The present inventor found that glycerin dissolved in a reaction oil causes a failure to sufficiently reduce by-products, and that when treatment of reducing glycerin dissolved in the reaction oil was performed after the transesterification reaction (the fat or oil after the treatment of reducing glycerin is hereinafter also referred to as "deglycerinized oil"), and subsequently treatment of bringing an adsorbent into contact with the deglycerinized oil was performed, by-products were sufficiently reduced while the composition of glycerides in the reaction oil was maintained, and hence a transesterified fat or oil rich in diacylglycerols with few by-products was obtained.

According to the present invention, the transesterified fat or oil rich in diacylglycerols with few by-products can be obtained.

A method of producing a transesterified fat or oil of the present invention includes: subjecting a fat or oil, and glycerin to a transesterification reaction; subsequently performing treatment of reducing the glycerin dissolved in a reaction oil; and then performing treatment of bringing an adsorbent into contact with the deglycerinized oil.

The terms "fat or oil" and "oil" as used herein have the same meaning. In addition, constituent substances of the fat or oil (oil) encompass not only triacylglycerols but also monoacylglycerols and diacylglycerols. That is, the fat or oil (oil) contains one or more of monoacylglycerols, diacylglycerols, and triacylglycerols.

In the present invention, the fat or oil to be subjected to the reaction with the glycerin generally contains triacylglycerols as a main component. Examples thereof may include: plant-derived fats or oils, such as soybean oil, rapeseed oil, safflower oil, rice oil, corn oil, sunflower oil, cotton seed oil, olive oil, sesame oil, peanut oil, coix seed oil, wheat germ oil, Japanese basil oil, linseed oil, perilla oil, chia seed oil, sacha inchi oil, walnut oil, kiwi seed oil, salvia seed oil, grape seed oil, macadamia nut oil, hazelnut oil, pumpkin seed oil, camellia oil, tea seed oil, borage oil, palm oil, palm olein, palm stearin, coconut oil, palm kernel oil, cacao butter, sal butter, shea butter, and algae oil; animal-derived fats or oils, such as fish oil, seal oil, whale oil, lard, beef tallow, and butter fat; microbial oils such as fats or oils derived from polyunsaturated fatty acid-producing microorganisms including zygomycetes; and transesterified oils, hydrogenated oils, and fractionated oils thereof. The fats or oils may be used alone or in combination thereof.

Of those, a liquid fat or oil is preferred as the fat or oil from the standpoints of the emulsification characteristic and handleability of the transesterified fat or oil. The liquid fat or oil means a fat or oil that is in a liquid state at 20°C when a cold test described in Standard Methods for Analysis of Fats, Oils and Related Materials 2.3.8-27 is performed.

In addition, in the present invention, a fat or oil to which a fatty acid having a carbon chain length of 18 or more, and having 3 or more double bonds is bound is preferably used because various physiological functions are expected. In particular, one or more of fats or oils selected from the group consisting of fats or oils rich in ω3 unsaturated fatty acids, such as Japanese basil oil, linseed oil, perilla oil, chia seed oil, sacha inchi oil, algae oil, fish oil, seal oil, whale oil, and fats or oils derived from polyunsaturated fatty acid-producing microorganisms, are preferably used.

The fish oil may be collected from, for example, a raw material, such as sardine, herring, saury, mackerel, bonito, tuna, squid, or cod liver. In addition, the algae oil may be collected from algae belonging to Chlorophyceae, Bacillariophyceae, or the like. Those oils are preferably subjected, as appropriate, to known means for separation or known means for refinement, such as liquid-liquid separation, filtration, or centrifugation, in order to remove impurities before the reaction.

In addition, there may be used a so-called concentrated oil in which the ratio of unsaturated fatty acids, such as eicosapentaenoic acid (C20:5, EPA) and docosahexaenoic acid (C22:6, DHA), in constituent fatty acids of a fat or oil is increased by selectively hydrolyzing the fish oil or the like with a lipase.

The content of the triacylglycerols in the fat or oil may be 100 mass%, and is preferably 95 mass% or less, more preferably 92 mass% or less, even more preferably 89 mass% or less from the standpoint of facilitating the concentration of, in particular, eicosapentaenoic acid or docosahexaenoic acid as a highly unsaturated fatty acid in the transesterified fat or oil. In addition, the content is preferably 70 mass% or more, more preferably 75 mass% or more, even more preferably 80 mass% or more from the standpoint of production efficiency. In order to set the content of the triacylglycerols in the fat or oil to be subjected to the reaction with the glycerin to less than 100 mass%, it is preferred that a lipase be allowed to act on the fat or oil to partially hydrolyze the fat or oil, and then the resultant fatty acids be removed by distillation. When the operation is performed, saturated fatty acids having 16 and 18 carbon atoms in the constituent fatty acids can be selectively removed, and hence the highly unsaturated fatty acids can be further concentrated in the fat or oil to be subjected to the reaction with the glycerin.

In addition, the content of free fatty acids or salts thereof in the fat or oil is preferably 10 mass% or less, more preferably 7 mass% or less, even more preferably 4 mass% or less, even more preferably 1 mass% or less from the standpoint of suppressing the inactivation of a catalyst. In addition, the content is preferably 0.01 mass% or more, more preferably 0.02 mass% or more, even more preferably 0.03 mass% or more from the standpoint of production efficiency.

The constituent fatty acids of the fat or oil are not particularly limited, and may be any of saturated fatty acids and unsaturated fatty acids.

From the standpoints of the handleability and industrial productivity of the fat or oil, the content of the unsaturated fatty acids in the constituent fatty acids of the fat or oil is preferably from 60 mass% to 100 mass%, more preferably from 70 mass% to 98 mass%, even more preferably from 80 mass% to 96 mass%. The number of carbon atoms of each of the unsaturated fatty acids is preferably from 14 to 24, more preferably from 16 to 22, even more preferably from 18 to 22 from the standpoint of physiological effects.

The amount of a fatty acid as used herein refers to an amount obtained by converting the fatty acid to a free fatty acid.

The constituent fatty acids of the fat or oil preferably contain a large amount of fatty acids each having a carbon chain length of 18 or more, and each having 3 or more double bonds from the standpoint that the constituent fatty acids have physiologically active functions. Further, according to the method of the present invention, the ratio of the fatty acids each having a carbon chain length of 18 or more, and each having 3 or more double bonds in the reaction oil is suppressed from being reduced as compared to the ratio of the fatty acids each having a carbon chain length of 18 or more, and each having 3 or more double bonds, the fatty acids each as a raw material for the reaction, in the fat or oil. Thus, a transesterified fat or oil having a large ratio of the fatty acids each having a carbon chain length of 18 or more, and each having 3 or more double bonds in the reaction oil can be obtained.

The total content of the fatty acids each having a carbon chain length of 18 or more, and each having 3 or more double bonds in the constituent fatty acids of the fat or oil is preferably 15 mass% or more, more preferably 20 mass% or more, even more preferably 25 mass% or more, still even more preferably 30 mass% or more from the standpoints of physiologically active functions and the standpoint of easily obtaining the effects of the present invention. In addition, the total content is preferably 99 mass% or less, more preferably 90 mass% or less, even more preferably 80 mass% or less from the standpoint of suppressing the generation of trans-form fatty acids as by-products. The total content of the fatty acids each having a carbon chain length of 18 or more, and each having 3 or more double bonds in the constituent fatty acids of the fat or oil is preferably from 15 mass% to 99 mass%, more preferably from 20 mass% to 90 mass%, even more preferably from 25 mass% to 80 mass%, still even more preferably from 30 mass% to 80 mass%.

Examples of the fatty acids each having a carbon chain length of 18 or more, and each having 3 or more double bonds in the constituent fatty acids of the fat or oil may include α-linolenic acid (C18:3), γ-linolenic acid (C18:3), arachidonic acid (C20:4), eicosapentaenoic acid (C20:5, EPA), docosapentaenoic acid (C22:5), and docosahexaenoic acid (C22:6, DHA). Of those, ω3 unsaturated fatty acids each having a double bond at the third position from a methyl group terminal of a carbon chain thereof are preferred from the standpoints of physiologically active functions and the standpoint of easily obtaining the effects of the present invention.

Glycerin having a purity of 95 mass% or more is preferred as the glycerin to be used in the present invention from the standpoint of improving reactivity.

In the present invention, a ratio of the number of moles of a fatty acid group to the number of moles of a glycerin group, [FA/GLY], when the reaction between the fat or oil, and the glycerin is performed is preferably 2.0 or less, more preferably 1.7 or less, even more preferably 1.4 or less from the standpoint of the generation of diacylglycerols. In addition, the ratio is preferably 0.60 or more, more preferably 0.65 or more, even more preferably 0.70 or more from the standpoint that glycerin insoluble in an oil phase can be reduced. The ratio of the number of moles of the fatty acid group to the number of moles of the glycerin group, [FA/GLY], when the reaction between the fat or oil, and the glycerin is performed is preferably from 0.60 to 2.0, more preferably from 0.65 to 1.7, even more preferably from 0.70 to 1.7.

The ratio of the number of moles of the fatty acid group to the number of moles of the glycerin group, [FA/GLY], is represented by the following equation (1). 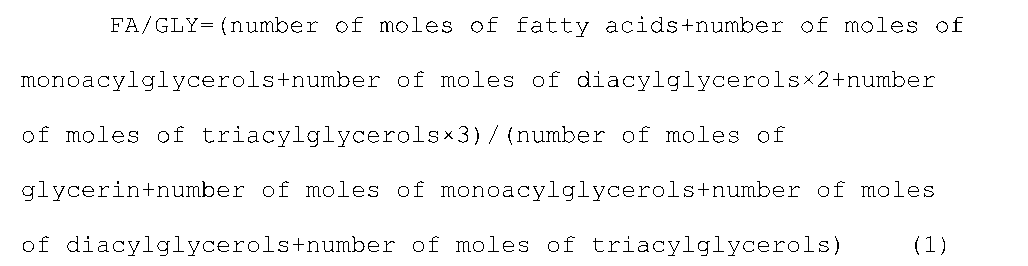 FA/GLY=(number of moles of fatty acids+number of moles of monoacylglycerols+number of moles of diacylglycerols×2+number of moles of triacylglycerols×3)/(number of moles of glycerin+number of moles of monoacylglycerols+number of moles of diacylglycerols+number of moles of triacylglycerols) (1)

In the present invention, a method that is heretofore known has only to be adopted for the transesterification reaction between the fat or oil, and the glycerin, and the reaction may be performed by any one of a chemical method or an enzymatic method, but the transesterification reaction is preferably performed by a chemical method using a chemical catalyst from the standpoint of promoting the transesterification reaction.

The chemical catalyst to be used in the present invention has only to catalyze the reaction. Examples thereof may include an alkali metal hydroxide, an alkaline earth metal hydroxide, and an alkoxide having 1 to 3 carbon atoms. Examples of the alkali metal hydroxide may include sodium hydroxide and potassium hydroxide. Examples of the alkaline earth metal hydroxide may include calcium hydroxide, magnesium hydroxide, and barium hydroxide. Examples of the alkoxide having 1 to 3 carbon atoms may include sodium methoxide and sodium ethoxide. Of those, calcium hydroxide and sodium methoxide are preferred.

The addition amount of the chemical catalyst is preferably 0.01 mass% or more, more preferably 0.02 mass% or more, even more preferably 0.03 mass% or more with respect to the raw materials for the reaction (total of the fat or oil, and the glycerin) from the standpoint of improving reactivity. In addition, the addition amount is preferably 10 mass% or less, more preferably 5 mass% or less, even more preferably 1.5 mass% or less from the standpoint that the amount of a neutralizer can be reduced.

In the case where the chemical catalyst is calcium hydroxide or sodium methoxide, the addition amount thereof is preferably from 0.04 mass% to 1.5 mass% with respect to the raw materials for the reaction from the same standpoint.

In the present invention, the timing of the addition of the catalyst to the raw materials for the reaction is not particularly limited. After the catalyst has been added to the raw materials for the reaction, the temperature of the raw materials is increased to a reaction temperature as required, and the transesterification reaction between the fat or oil, and the glycerin is performed.

In the present invention, the reaction temperature is preferably 90°C or more, more preferably 95°C or more, even more preferably 100°C or more from the standpoint of improving the reaction rate. In addition, the temperature is preferably 250°C or less, more preferably 235°C or less, even more preferably 220°C or less from the standpoint of reducing the content of by-products in the reaction oil. The reaction temperature is preferably from 90°C to 250°C, more preferably from 95°C to 235°C, even more preferably from 100°C to 220°C.

In addition, in the case where the fat or oil to which a fatty acid having a carbon chain length of 18 or more, and having 3 or more double bonds is bound is used as a raw material, the upper limit of the temperature when the transesterification reaction is performed is preferably 165°C or less, more preferably 160°C or less, even more preferably 155°C or less from the standpoint that the generation of trans acids is suppressed. The reaction temperature when the fat or oil to which a fatty acid having a carbon chain length of 18 or more, and having 3 or more double bonds is bound is used as a raw material is preferably from 90°C to 165°C, more preferably from 95°C to 160°C, even more preferably from 100°C to 155°C.

The temperature increase rate of the raw materials for the reaction up to the reaction temperature is preferably 0.1°C/min or more, more preferably 0.15°C/min or more, even more preferably 0.2°C/min or more from the standpoint of suppressing the inactivation of the catalyst and the standpoint of industrial productivity. In addition, the temperature increase rate is preferably 20°C/min or less, more preferably 10°C/min or less, even more preferably 3°C/min or less from the standpoint of reducing a heating load on equipment. The temperature increase rate of the raw materials for the reaction up to the reaction temperature is preferably from 0.1°C/min to 20°C/min, more preferably from 0.15°C/min to 10°C/min, even more preferably from 0.2°C/min to 3°C/min.

A reaction time is preferably 0.2 hour or more, more preferably 0.4 hour or more, even more preferably 0.6 hour or more from the standpoint of the production of diacylglycerols. In addition, the reaction time is preferably 15 hours or less, more preferably 12 hours or less, even more preferably 9 hours or less from the standpoint of industrial productivity. The reaction time is preferably 0.2 hour or more and 15 hours or less, more preferably 0.4 hour or more and 12 hours or less, even more preferably 0.6 hour or more and 9 hours or less.

The reaction between the fat or oil, and the glycerin is preferably performed after water in the raw materials for the reaction has been removed by pressure reduction, nitrogen bubbling, or the like from the standpoint of improving reactivity and the standpoint of suppressing a reduction in catalyst performance.

The moisture concentration of the raw materials for the reaction before the addition of the catalyst is preferably from 0.01 mass% to 0.5 mass%, more preferably from 0.03 mass% to 0.4 mass%, even more preferably from 0.05 mass% to 0.3 mass% from the standpoint of industrial productivity and the standpoint of suppressing the reduction in catalyst performance.

The reaction may be generally performed under reduced pressure or normal pressure. When the reaction is performed under reduced pressure, the pressure is not particularly limited, and is preferably 13 000 Pa or less from the standpoint of reducing the amount of moisture in the reaction system. In addition, when the reaction is performed under normal pressure, the reaction is preferably performed under a nitrogen atmosphere through which nitrogen is flowed in order to suppress the oxidation of the transesterified fat or oil to be obtained.

After the completion of the transesterification reaction, the reaction oil has mixed therein the chemical catalyst used as the catalyst. Accordingly, it is preferred to neutralize the chemical catalyst and remove the catalyst by filtration or the like after the completion of the transesterification reaction.

The neutralizer is not particularly limited, and acids, such as sulfuric acid, hydrochloric acid, and phosphoric acid, are preferred, and phosphoric acid is more preferred from the standpoint that a neutralized product is insoluble in water and the fat or oil, and can be easily removed by filtration.

In the present invention, the neutralization of the chemical catalyst is performed by adding the neutralizer to the chemical catalyst in an amount of preferably 0.7 molar times or more, more preferably 0.8 molar times or more, even more preferably 0.9 molar times or more, still even more preferably 1.2 molar times or more, still even more preferably 1.25 molar times or more, still even more preferably 1.3 molar times or more from the standpoint of eliminating catalytic activity. In addition, the upper limit of the molar ratio is not particularly limited, and the molar ratio is preferably 3.0 molar times or less, more preferably 2.6 molar times or less, even more preferably 2.2 molar times or less from the standpoint of suppressing an increase in acid value of a neutralized oil. The amount of the neutralizer with respect to the chemical catalyst is preferably from 0.7 molar times to 3.0 molar times, more preferably from 0.8 molar times to 2.6 molar times, even more preferably from 0.9 molar times to 2.2 molar times.

From the standpoint of further reducing glycidol fatty acid esters, the molar ratio between the chemical catalyst and the neutralizer is preferably close to equimolar, and the amount of the neutralizer with respect to the chemical catalyst is preferably from 0.7 molar times to 1.3 molar times, more preferably from 0.8 molar times to 1.2 molar times, even more preferably from 0.9 molar times to 1.1 molar times.

The temperature of a neutralization step, that is, a step from the loading of the neutralizer into the reaction oil having mixed therein the chemical catalyst to the completion of stirring (the same applies hereinafter) is preferably 20°C or more, more preferably 40°C or more, even more preferably 60°C or more from the standpoint of sufficiently producing the neutralized product. In addition, the temperature is preferably 250°C or less, more preferably 235°C or less, even more preferably 220°C or less from the standpoint that a reverse reaction can be suppressed, and oxidation can be suppressed.

The time period of the neutralization step is preferably from 1 minute to 240 minutes, more preferably from 3 minutes to 180 minutes, even more preferably from 10 minutes to 120 minutes from the standpoint of sufficiently producing the neutralized product.

In the neutralization step, it is preferred to perform the neutralization under stirring from the standpoint of sufficiently producing the neutralized product. Means for the stirring is not particularly limited.

After the neutralization step, it is preferred to separate glycerin forming a different phase from the reaction oil. When the ratio of the number of moles of a fatty acid group to the number of moles of a glycerin group, [FA/GLY], is reduced, glycerin and a neutralized product insoluble in the oil phase are present in the reaction oil after the neutralization step. Accordingly, a step of separating those materials is performed after the neutralization. Examples of separation means may include methods by filtration, standing separation, and centrifugation, which can be easily performed. Of those, a method by centrifugation is preferred from the standpoint that the catalyst and unreacted glycerin can be separated simultaneously.

The composition of glycerides in the reaction oil after the separation of the glycerin and the neutralized product insoluble in the oil phase is as follows from the standpoint of improving physiological activity functions: the content of diacylglycerols is preferably from 15 mass% to 60 mass%, more preferably from 20 mass% to 55 mass%, even more preferably from 25 mass% to 55 mass%; the content of monoacylglycerols is preferably from 15 mass% to 60 mass%, more preferably from 20 mass% to 55 mass%, even more preferably from 25 mass% to 50 mass%; the content of triacylglycerols is preferably 30 mass% or less, more preferably 20 mass% or less, even more preferably from 5 mass% to 15 mass%; and the content of free fatty acids is preferably from 0.1 mass% to 10 mass%, more preferably from 0.1 mass% to 7 mass%, even more preferably from 0.1 mass% to 5 mass%.

The reaction oil after the completion of the transesterification reaction contains dissolved glycerin. It has been found that the cause of the failure to sufficiently reduce glycidol fatty acid esters, which are by-products in the transesterified fat or oil, lies in glycerin dissolved in the reaction oil. Accordingly, in the present invention, treatment of reducing the glycerin dissolved in the reaction oil is performed next.

A glycerin concentration in the reaction oil before the performance of the treatment of reducing the glycerin is preferably 1.5 mass% or more, more preferably 1.8 mass% or more, even more preferably 2.0 mass% or more, still even more preferably 2.5 mass% or more from the standpoint of the necessity of reducing the glycerin concentration. In addition, the upper limit thereof is preferably 9 mass% or less, more preferably 7 mass% or less, even more preferably 5 mass% or less from the standpoint of the solubility limit of glycerin in the fat or oil. The glycerin concentration in the reaction oil before the performance of the treatment of reducing the glycerin is preferably from 1.5 mass% to 9 mass%, more preferably from 1.8 mass% to 7 mass%, even more preferably from 2.0 mass% to 7 mass%, still even more preferably from 2.5 mass% to 5 mass%.

In the present invention, examples of the treatment of reducing the glycerin dissolved in the reaction oil may include, but are not limited to, distillation treatment, water washing treatment, and deodorization treatment. The treatment of reducing the glycerin dissolved in the reaction oil may be performed by any one of treatment, or a combination of two or more of treatments.

Examples of a pressure reduction device used for the distillation treatment may include a batch simple distillation device, a batch rectification device, a continuous rectification device, a flash evaporator, and a thin-film evaporator. Of those, a thin-film evaporator is preferred from the standpoints of reducing equipment cost and operation cost, increasing distillation capacity, and allowing optimal selection of a distillation temperature.

In the distillation treatment, distillation conditions that bring the glycerin concentration of the deglycerinized oil after distillation into a concentration range to be described later may be set based on a vapor pressure curve.

The distillation temperature is preferably 200°C or less, more preferably 175°C or less, even more preferably 150°C or less from the standpoints that the monoacylglycerols, the diacylglycerols, and the triacylglycerols are not distilled off, and that no thermal history is given. In addition, the distillation temperature is preferably 20°C or more, more preferably 40°C or more, even more preferably 60°C or more from the standpoint of distillation efficiency of glycerin. The distillation temperature is preferably from 20°C to 200°C, more preferably from 40°C to 175°C, even more preferably from 60°C to 150°C.

A vacuum degree in the distillation treatment is preferably 5 000 Pa or less, more preferably 500 Pa or less, even more preferably 50 Pa or less from the standpoints that the monoacylglycerols, the diacylglycerols, and the triacylglycerols are not distilled off, and that no thermal history is given. In addition, the vacuum degree is preferably 0.01 Pa or more, more preferably 0.1 Pa or more, even more preferably 1 Pa or more from the standpoint of distillation efficiency of glycerin. The vacuum degree is preferably from 0.01 Pa to 5 000 Pa, more preferably from 0.1 Pa to 500 Pa, even more preferably from 1 Pa to 50 Pa.

The water washing treatment may be repeated a plurality of times, for example, twice or three times. A method of bringing water into contact with the reaction oil is, for example, a batch type in which the reaction oil and the water are mixed and stirred, and then separated by filtration. Before the water is brought into contact with the reaction oil, an aqueous solution containing a chelating agent such as citric acid may be added to and mixed with the reaction oil. At this time, the treatment is preferably performed under a stream of an inert gas such as nitrogen.

Examples of the water may include tap water, purified water, distilled water, and ion-exchanged water.

The amount of the water used is preferably from 1 mass% to 500 mass%, more preferably from 3 mass% to 300 mass%, even more preferably from 5 mass% to 200 mass% with respect to the reaction oil from the standpoint that the glycerin can be sufficiently removed.

The temperature of the water washing treatment is preferably 90°C or less, more preferably from 20°C to 90°C, even more preferably from 30°C to 80°C from the standpoints of industrial productivity, and bringing the reaction oil and the water into sufficient contact.

In addition, from the same standpoints, the time of the water washing treatment is preferably from 0.1 minute to 120 minutes, more preferably from 0.2 minute to 60 minutes, even more preferably from 0.3 minute to 30 minutes.

The deodorization treatment is basically performed by steam distillation under reduced pressure, and examples thereof may include a batch type, a semi-continuous type, and a continuous type. The deodorization treatment of bringing steam into contact with the reaction oil under reduced pressure includes a method performed solely by a thin-film deodorization device or a tray-type deodorization device, and a method performed by combining deodorization treatment using the thin-film deodorization device and treatment using the tray-type deodorization device. In the present invention, a method performed solely by a thin-film column or a tray-type deodorization device is preferred from the standpoints of equipment cost, taste and flavor, and the like.

A deodorization temperature is preferably from 90°C to 210°C, more preferably from 100°C to 200°C, even more preferably from 110°C to 190°C from the standpoint of reducing by-products in adsorption treatment.

A vacuum degree in the deodorization treatment is preferably 20 000 Pa or less, more preferably 10 000 Pa or less, even more preferably 5 000 Pa or less from the standpoints that the monoacylglycerols, the diacylglycerols, and the triacylglycerols are not distilled off, and that no thermal history is given. In addition, the vacuum degree is preferably 10 Pa or more, more preferably 50 Pa or more, even more preferably 100 Pa or more from the standpoint of distillation efficiency of glycerin. The vacuum degree is preferably from 10 Pa to 20 000 Pa, more preferably from 50 Pa to 10 000 Pa, even more preferably from 100 Pa to 5 000 Pa.

The amount of the steam is preferably from 0.5%/h to 20%/h, more preferably from 1.0%/h to 10%/h from the standpoint of distillation efficiency of glycerin.

The glycerin concentration in the deglycerinized oil after the performance of the treatment of reducing the glycerin is preferably 3.0 mass% or less, more preferably 2.5 mass% or less, even more preferably 2.0 mass% or less, still even more preferably 1.5 mass% or less, still even more preferably 1.0 mass% or less, still even more preferably 0.7 mass% or less, still even more preferably 0.5 mass% or less from the standpoint of sufficiently reducing glycidol fatty acid esters. In addition, the glycerin concentration in the deglycerinized oil may be 0 mass%, but is preferably 0.001 mass% or more, more preferably 0.01 mass% or more, even more preferably 0.1 mass% or more from the standpoint of industrial productivity. The glycerin concentration in the deglycerinized oil after the performance of the treatment of reducing the glycerin is preferably 3.0 mass% or less, more preferably from 0.001 mass% to 3.0 mass%, even more preferably from 0.001 mass% to 2.5 mass%, still even more preferably from 0.001 mass% to 2.0 mass%, still even more preferably from 0.01 mass% to 2.0 mass%, still even more preferably from 0.01 mass% to 1.5 mass%, still even more preferably from 0.01 mass% to 1.0 mass%, still even more preferably from 0.01 mass% to 0.7 mass%, still even more preferably from 0.1 mass% to 1.0 mass%, still even more preferably from 0.1 mass% to 0.5 mass%.

In addition, the composition of glycerides in the deglycerinized oil after the performance of the treatment of reducing the glycerin is as follows from the standpoint of improving physiological activity functions: the content of diacylglycerols is preferably from 15 mass% to 61 mass%, more preferably from 20 mass% to 56 mass%, even more preferably from 25 mass% to 56 mass%; the content of triacylglycerols is preferably 31 mass% or less, more preferably 21 mass% or less, even more preferably from 5 mass% to 16 mass%; the content of monoacylglycerols is preferably from 15 mass% to 61 mass%, more preferably from 20 mass% to 56 mass%, even more preferably from 25 mass% to 51 mass%; and the content of free fatty acids is preferably 10 mass% or less, preferably from 0.1 mass% to 10 mass%, more preferably from 0.1 mass% to 7 mass%, even more preferably from 0.1 mass% to 5 mass%.

Next, treatment of bringing an adsorbent into contact with the deglycerinized oil is performed. A porous adsorbent is preferred as the adsorbent, and examples thereof may include activated carbon, silicon dioxide, and a solid acid adsorbent. Examples of the solid acid adsorbent may include acid clay, activated clay, activated alumina, silica gel, silica-alumina, and aluminum silicate. Those solid acid adsorbents may be used alone or in combination thereof. Of those, a solid acid adsorbent is preferred, and acid clay and activated clay are particularly preferred from the standpoints of reducing the content of by-products, and making taste and flavor, and hue satisfactory.

The acid clay and the activated clay each contain SiO₂, Al₂O₃, Fe₂O₃, CaO, MgO, or the like as a general chemical component, and the SiO₂/Al₂O₃ ratio of each clay is preferably from 3 to 12, particularly preferably from 4 to 10. In addition, acid clay and activated clay each having composition containing 1% to 5% of Fe₂O₃, 0% to 1.5% of CaO, and 1% to 7% of MgO are preferred.

The activated clay is obtained by subjecting naturally occurring acid clay (montmorillonite-based clay) to treatment with a mineral acid such as sulfuric acid, and is a compound having a porous structure having a large specific surface area and adsorption capacity. It is known that, when the acid clay is further subjected to treatment with an acid, its specific surface area changes, its decoloration ability is improved, and its physical properties change. The specific surface area of the acid clay or the activated clay varies depending on the degree of the acid treatment and the like, but is preferably from 50 m²/g to 400 m²/g, and the pH (5% suspension) thereof is preferably from 2.5 to 9, particularly preferably from 3 to 7.

Commercially available products, such as Mizuka Ace #20 and Mizuka Ace #400 (all manufactured by Mizusawa Industrial Chemicals, Ltd.), may each be used as the acid clay, and commercially available products, such as Galleon Earth V2R, Galleon Earth NV, and Galleon Earth GSF (all manufactured by Mizusawa Industrial Chemicals, Ltd.), may each be used as the activated clay.

In this treatment, perlite, silicon dioxide, diatomaceous earth, or the like may be added as appropriate as a filtration aid from the standpoint that a filtration rate is fast and productivity is satisfactory.

The amount of the adsorbent used is preferably 0.1 mass% or more, more preferably 0.3 mass% or more, even more preferably 0.5 mass% or more with respect to the deglycerinized oil from the standpoint of sufficiently reducing glycidol fatty acid esters. In addition, the amount is preferably 10 mass% or less, more preferably 6 mass% or less, even more preferably 3 mass% or less from the standpoint of industrial productivity. The amount of the adsorbent used is preferably from 0.1 mass% to 10 mass%, more preferably from 0.3 mass% to 6 mass%, even more preferably from 0.5 mass% to 3 mass%.

A contact temperature between the deglycerinized oil and the adsorbent is preferably 20°C or more, more preferably 40°C or more, even more preferably 60°C or more from the standpoint of sufficiently reducing glycidol fatty acid esters. In addition, the contact temperature is preferably 150°C or less, more preferably 135°C or less, even more preferably 120°C or less from the standpoints of suppressing oxidation and industrial productivity.

A contact time therebetween is preferably 2 minutes or more, more preferably 5 minutes or more, even more preferably 10 minutes or more from the standpoint of sufficiently reducing glycidol fatty acid esters. In addition, the contact time is preferably within 60 minutes, more preferably within 50 minutes, even more preferably within 40 minutes from the standpoints of suppressing oxidation and industrial productivity.

When a reaction oil obtained by a transesterification reaction between the fat or oil, and the glycerin is commercialized as an edible fat or oil, the monoacylglycerols are easily emulsified to have a unique taste and flavor, and hence it is preferred to reduce the amount of monoacylglycerols in the reaction oil from the standpoints of reducing purification load and improving taste and flavor. When the contact time between the deglycerinized oil and the adsorbent is made longer, a transesterified fat or oil rich in diacylglycerols can be produced while monoacylglycerols are reduced. Thus, the purity of the diacylglycerols [diacylglycerols/(diacylglycerols+triacylglycerols)×100] in the product can be increased. Accordingly, the contact time between the deglycerinized oil and the adsorbent is preferably 20 minutes or more, more preferably 30 minutes or more, even more preferably 45 minutes or more, still even more preferably 60 minutes or more from the standpoints of: obtaining an edible fat or oil having high physiological effects resulting from diacylglycerols; reducing purification load; and improving taste and flavor. In addition, the contact time is preferably within 10 hours, more preferably within 5 hours, even more preferably within 3 hours from the standpoints of suppressing oxidation and industrial productivity. The contact time between the deglycerinized oil and the adsorbent is preferably from 20 minutes to 10 hours, more preferably from 30 minutes to 10 hours, even more preferably from 45 minutes to 5 hours, still even more preferably from 60 minutes to 3 hours.

The pressure of the reaction may be reduced pressure or normal pressure, but the reaction is preferably performed under reduced pressure from the standpoint of suppressing the oxidation of the fat or oil. In the case of normal pressure, the reaction is preferably performed under a nitrogen atmosphere.

A specific pressure is preferably from 100 Pa to 13 000 Pa, more preferably from 500 Pa to 10 000 Pa, even more preferably from 1 000 Pa to 5 000 Pa.

After the performance of the treatment of bringing the adsorbent into contact with the deglycerinized oil, an operation of separating the adsorbent is performed. Filtration is preferred as separation means. The operation may be performed by using any of suction filtration, pressure filtration, centrifugal filtration, and the like as filtration means, and a filtration unit used in a step of decoloring a fat or oil may be used.

In the adsorbent-treated oil after the performance of the treatment of bringing the adsorbent into contact with the deglycerinized oil, the composition of glycerides in the reaction oil is maintained. The composition of glycerides in the adsorbent-treated oil of the present invention is as follows from the standpoint of improving physiological activity functions: the content of diacylglycerols is preferably from 17 mass% to 71 mass%, more preferably from 22 mass% to 66 mass%, even more preferably from 27 mass% to 66 mass%; the content of triacylglycerols is preferably 31 mass% or less, more preferably 21 mass% or less, even more preferably from 5 mass% to 16 mass%; and the content of monoacylglycerols is preferably from 13 mass% to 59 mass%, more preferably from 18 mass% to 54 mass%, even more preferably from 23 mass% to 49 mass%.

In addition, when the treatment of bringing the adsorbent into contact with the deglycerinized oil is performed for 20 minutes or more, the content of diacylglycerols in the adsorbent-treated oil increases. The composition of glycerides in the adsorbent-treated oil when the adsorbent contact treatment is performed for 20 minutes or more is as follows from the standpoint of improving physiological activity functions: the content of diacylglycerols is preferably from 18 mass% to 72 mass%, more preferably from 23 mass% to 67 mass%, even more preferably from 28 mass% to 67 mass%; the content of triacylglycerols is preferably 31 mass% or less, more preferably 21 mass% or less, even more preferably from 5 mass% to 16 mass%; and the content of monoacylglycerols is preferably from 12 mass% to 58 mass%, more preferably from 17 mass% to 53 mass%, even more preferably from 22 mass% to 48 mass%.

As a result of the treatment of the present invention, a transesterified fat or oil having a small content of glycidol fatty acid esters, which are by-products, can be obtained.

The content of the glycidol fatty acid esters may be determined by measuring the amount of 3-chloropropane-1,2-diol ester (3-MCPD-E), and the total amount (MCPD-FS) of 3-chloropropane-1,2-diol (3-MCPD), 3-chloropropane-1,2-diol ester (3-MCPD-E), glycidol, and fatty acid esters of glycidol.

The content of 3-MCPD-E may be measured by a method described in the Deutsche Gesellschaft für Fettwissenschaft Standard Methods C-VI 18(10) (DGF Standard Methods 2010 (16. Supplement), C-VI 18(10), "Fatty-acid-bound 3-chloropropane-1,2-diol (3-MCPD) and 2,3-epoxi-propane-1-ol (glycidol)"). In the present invention, a value obtained by the method of Assay B of the Standard Methods is defined as the content of 3-MCPD-E.

In addition, the content of MCPD-FS may be measured by a method described in the Deutsche Gesellschaft für Fettwissenschaft (hereinafter also referred to as "DGF") Standard Methods C-III 18(09) (DGF Standard Methods 2009 (14. Supplement), C-III 18(09), "Ester-bound 3-chloropropane-1,2-diol (3-MCPD esters) and glycidol (glycidyl esters)"). In the present invention, a method of Option A ("7.1 Option A: Determination of the sum of ester-bound 3-MCPD and glycidol") described in the Standard Methods 7.1 is used for quantifying the ester of glycidol.

The details are described in Examples.

The content of the glycidol fatty acid esters in the transesterified fat or oil of the present invention is preferably 0.45 mg/kg or less, more preferably 0.4 mg/kg or less, even more preferably 0.35 mg/kg or less from the standpoint of the safety of the glyceride product to be obtained. In addition, the content is preferably 0.00 mg/kg, but is preferably 0.01 mg/kg or more, more preferably 0.03 mg/kg or more, even more preferably 0.06 mg/kg or more from the standpoint of industrial productivity. The content of the glycidol fatty acid esters in the transesterified fat or oil is preferably from 0.01 mg/kg to 0.45 mg/kg, more preferably from 0.03 mg/kg to 0.4 mg/kg, even more preferably from 0.06 mg/kg to 0.35 mg/kg.

In addition, in the transesterified fat or oil when the treatment of bringing the adsorbent into contact with the deglycerinized oil is performed for 20 minutes or more, the amount of diacylglycerols increased during a time period before the performance of the treatment of bringing the adsorbent into contact with the deglycerinized oil and after the performance the treatment of bringing the adsorbent into contact with the deglycerinized oil is preferably 3.5 mass% or more, more preferably 4.0 mass% or more, even more preferably 5.0 mass% or more, still even more preferably 6.0 mass% or more from the standpoint of enhancing physiological effects. In addition, the amount is preferably 20 mass% or less, more preferably 15 mass% or less, even more preferably 10 mass% or less from the standpoint of industrial productivity. In the transesterified fat or oil, the amount of diacylglycerols increased during the time period before the performance of the treatment of bringing the adsorbent into contact with the deglycerinized oil and after the performance of the treatment of bringing the adsorbent into contact with the deglycerinized oil is preferably from 3.5 mass% to 20 mass%, more preferably from 4.0 mass% to 15 mass%, even more preferably from 5.0 mass% to 10 mass%, still even more preferably from 6.0 mass% to 10 mass%.

The transesterified fat or oil to be obtained by the method of the present invention is rich in diacylglycerols, and its composition of glycerides is similar to that of the adsorbent-treated oil described above. In addition, the concentration of diacylglycerols or a purification step for an ordinary fat or oil other than the treatment described above may be performed as required, and the transesterified fat or oil may be used in the same manner as in a general edible fat or oil.

In relation to the above-mentioned embodiments, the present invention further discloses the following methods of producing transesterified fats or oils.
<1> A method of producing a transesterified fat or oil, the method comprising: subjecting a fat or oil, and glycerin to a transesterification reaction; subsequently performing treatment of reducing the glycerin dissolved in a reaction oil; and then performing treatment of bringing an adsorbent into contact with a deglycerinized oil.
<2> The method of producing a transesterified fat or oil according to <1>, wherein a glycerin concentration in the deglycerinized oil after the treatment of reducing the glycerin dissolved in the reaction oil is 3.0 mass% or less.
<3> The method of producing a transesterified fat or oil according to <1> or <2>, wherein a ratio of the number of moles of a fatty acid group to the number of moles of a glycerin group, [FA/GLY], when the transesterification reaction between the fat or oil, and the glycerin is performed is 2.0 or less.
<4> The method of producing a transesterified fat or oil according to any one of <1> to <3>, wherein a contact temperature between the deglycerinized oil and the adsorbent is 20°C or more.
<5> The method of producing a transesterified fat or oil according to any one of <1> to <4>, wherein the adsorbent is one or more selected from the group consisting of solid acid adsorbents.
<6> The method of producing a transesterified fat or oil according to any one of <1> to <5>, wherein the adsorbent is one or more selected from the group consisting of acid clay and activated clay.
<7> The method of producing a transesterified fat or oil according to any one of <1> to <6>, wherein the adsorbent is brought into contact with the deglycerinized oil in an amount of 10 mass% or less.
<8> The method of producing a transesterified fat or oil according to any one of <1> to <7>, wherein a glycerin concentration in the reaction oil before the performance of the treatment of reducing the glycerin is from 1.5 mass% to 9 mass%.
<9> The method of producing a transesterified fat or oil according to any one of <1> to <8>, wherein a content of glycidol fatty acid esters in the transesterified fat or oil is from 0.01 mg/kg to 0.45 mg/kg.
<10> The method of producing a transesterified fat or oil according to any one of <1> to <9>, wherein the treatment of bringing the adsorbent into contact with the deglycerinized oil is performed for 20 minutes or more.
<11> The method of producing a transesterified fat or oil according to <10>, wherein, in the transesterified fat or oil, an amount of diacylglycerols increased during a time period before the performance of the treatment of bringing the adsorbent into contact with the deglycerinized oil and after the performance of the treatment of bringing the adsorbent into contact with the deglycerinized oil is from 3.5 mass% to 20 mass%.
<12> The method of producing a transesterified fat or oil according to any one of <1> to <11>, wherein a diacylglycerol content in an adsorbent-treated oil after the performance of the treatment of bringing the adsorbent into contact with the deglycerinized oil is from 17 mass% to 71 mass%.
<13> The method of producing a transesterified fat or oil according to any one of <1> to <12>, wherein a monoacylglycerol content in an adsorbent-treated oil after the performance of the treatment of bringing the adsorbent into contact with the deglycerinized oil is from 13 mass% to 59 mass%.
<14> The method of producing a transesterified fat or oil according to any one of <1> to <13>, wherein a total content of fatty acids each having a carbon chain length of 18 or more, and each having 3 or more double bonds in constituent fatty acids of the fat or oil is from 15 mass% to 99 mass%.
<15> The method of producing a transesterified fat or oil according to any one of <1> to <14>, wherein a glycerin concentration in the reaction oil before the performance of the treatment of reducing the glycerin is from 1.8 mass% to 7 mass%, and a glycerin concentration in the deglycerinized oil is from 0.001 mass% to 2.0 mass%.
<15> The method of producing a transesterified fat or oil according to any one of <1> to <14>, wherein the adsorbent is brought into contact with the deglycerinized oil having a glycerin concentration of 2.0 mass% or less in an amount of from 0.1 mass% to 10 mass%.
<16> The method of producing a transesterified fat or oil according to any one of <1> to <15>, wherein a content of glycidol fatty acid esters in the transesterified fat or oil is from 0.03 mg/kg to 0.4 mg/kg, and wherein a diacylglycerol content therein is from 22 mass% to 66 mass%.
<17> The method of producing a transesterified fat or oil according to any one of <1> to <16>, wherein, in the transesterified fat or oil, an amount of diacylglycerols increased during a time period before the performance of the treatment of bringing the adsorbent into contact with the deglycerinized oil and after the performance of the treatment of bringing the adsorbent into contact with the deglycerinized oil is from 4.0 mass% to 15 mass%, and wherein a diacylglycerol content in the transesterified fat or oil is from 23 mass% to 67 mass%.
<18> The method of producing a transesterified fat or oil according to any one of <1> to <17>, wherein a ratio of the number of moles of a fatty acid group to the number of moles of a glycerin group, [FA/GLY], when the transesterification reaction between the fat or oil, and the glycerin is performed is from 0.60 to 2.0.

### Examples

In the following Examples, "%" means "mass%".

### [Analysis Method]

### (i) Measurement of Composition of Glycerides

About 10 mg of a fat or oil, and 0.5 mL of a trimethylsilylating agent ("Silylating agent TH," manufactured by Kanto Chemical Co., Inc.) were loaded into a sample bottle made of glass, and the bottle was sealed and heated at 70°C for 15 minutes. 1.5 mL of water and 1.5 mL of hexane were added thereto, and the bottle was shaken. The bottle was left at rest, and then the upper layer was subjected to gas chromatography (GC). Thus, the composition of glycerides was analyzed.

### (ii) Measurement of MCPD-FS (in Conformity with Option A of Deutsche Gesellschaft für Fettwissenschaft (DGF) Standard Methods C-III 18(09))

About 100 mg of a fat or oil sample was weighed into a test tube with a cap, and 50 µL of an internal standard (3-MCPD-d5/t-butyl methyl ether), 500 µL of a mixed solution containing t-butyl methyl ether and ethyl acetate (volume ratio: 8:2), and 1 mL of 0.5 N sodium methoxide were added thereto. The mixture was stirred and then left at rest for 10 minutes. 3 mL of hexane, and 3 mL of an aqueous solution containing 3.3% acetic acid and 20% sodium chloride were added to the mixture, followed by stirring. After that, the upper layer was removed. Further, 3 mL of hexane was added thereto, followed by stirring. After that, the upper layer was removed. 250 µL of a mixed liquid containing 1 g of phenylboronic acid and 4 mL of 95% acetone was added thereto, followed by stirring, and the mixture was stirred. After that, the test tube was sealed and heated at 80°C for 20 minutes. 3 mL of hexane was added thereto, followed by stirring. After that, a glycidol fatty acid ester was quantified by subjecting the upper layer to a gas chromatograph-mass spectrometer (GC-MS).

### (iii) Measurement of 3-MCPD-E (in Conformity with Assay B of Deutsche Gesellschaft für Fettwissenschaft (DGF) Standard Methods C-VI 18(10))

About 100 mg of a fat or oil sample was weighed into a test tube with a cap, and 100 µL of an internal standard (3-MCPD-d5-dipalmitate/t-butyl methyl ether), 100 µL of t-butyl methyl ether, and 200 µL of 0.5 N sodium methoxide were added thereto. The mixture was stirred and then left at rest for 5 minutes. 600 µL of isohexane, and 600 µL of an aqueous solution containing 8.75 mass% sulfuric acid and 60 mass% sodium bromide were added to the mixture, followed by stirring. After that, the upper layer was removed. Further, 600 µL of isohexane was added thereto, followed by stirring. After that, the upper layer was removed. The lower layer was extracted three times with 600 µL of a mixed solution containing diethyl ether and ethyl acetate (volume ratio: 3:2). 100 µL of a saturated solution containing phenylboronic acid and diethyl ether was added to the extract, followed by stirring. The organic solvent was evaporated under a nitrogen stream. After that, 500 µL of isooctane was added thereto, followed by stirring. After that, 3-MCPD-E was quantified by subjecting the resultant to a gas chromatograph-mass spectrometer (GC-MS).

The values quantified in the sections (ii) and (iii) described above were converted into the content of glycidol fatty acid esters (GE) by the following equation (2). $GE \left[mg as G/kg\right] = \left(MCPD-FS \left[mg/kg\right]-3-MCPD-E \left[mg/kg\right]\right) \times 74 / 110$ (2)

### [Preparation of Reaction Oil "a"]

A fat or oil, and glycerin as raw materials for a reaction shown in Table 1 were loaded into a 5 L four-necked flask mounted with a stirring blade (90 mm×25 mm).

While being stirred at 400 r/min, the mixture was dehydrated under reduced pressure for 30 minutes under the conditions of 80°C and 400 Pa. After that, the pressure was returned to normal pressure while nitrogen was introduced. While nitrogen was flowed into a space in the flask, the temperature was increased to 150°C as a reaction temperature at a temperature increase rate of 1°C/min. Next, 0.10 mass% of calcium hydroxide as a catalyst with respect to the raw materials was added to perform a transesterification reaction under the conditions of a temperature of 150°C and normal pressure (nitrogen flow). After 5 hours from the start of the reaction, the mixture was cooled to 90°C, and phosphoric acid as a neutralizer was added thereto so that a molar ratio with respect to the catalyst became 1.5, followed by stirring for 30 minutes to neutralize the mixture. After that, the mixture was cooled to 60°C and centrifuged at 3 000 r/min for 10 minutes. The sedimented glycerin and catalyst were removed. Thus, a reaction oil "a" was obtained. The analysis results of the reaction oil "a" are shown in Table 1.

### [Preparation of Reaction Oil "b"]

A fat or oil, and glycerin as raw materials for a reaction shown in Table 1 were loaded into a 1 L four-necked flask mounted with a stirring blade (90 mm×25 mm).

The same treatment as that of the reaction oil "a" was performed except that: the catalyst was added after the temperature had reached 210°C as a reaction temperature; and the reaction time was set to 1 hour. Thus, a reaction oil "b" was obtained. The analysis results of the reaction oil "b" are shown in Table 1.

### [Preparation of Reaction Oil "c"]

A fat or oil, and glycerin as raw materials for a reaction shown in Table 1 were loaded into a 2 L four-necked flask mounted with a stirring blade (90 mm×25 mm).

The same treatment as that of the reaction oil "a" was performed except that the addition amount of the catalyst was set to 0.05 mass% with respect to the raw materials. Thus, a reaction oil "c" was obtained. The analysis results of the reaction oil "c" are shown in Table 1.

### [Preparation of Reaction Oil "d"]

A fat or oil, and glycerin as raw materials for a reaction shown in Table 1 were loaded into a 2 L four-necked flask mounted with a stirring blade (90 mm×25 mm).

The same treatment as that of the reaction oil "a" was performed except that the addition amount of the catalyst was set to 0.15 mass% with respect to the raw materials. Thus, a reaction oil "d" was obtained. The analysis results of the reaction oil "d" are shown in Table 1.

### [Preparation of Reaction Oil "e"]

The same treatment as that of the reaction oil "c" was performed except that: sodium methoxide was used as a catalyst; and 0.22 mass% thereof was added to the raw materials. Thus, a reaction oil "e" was obtained. The analysis results of the reaction oil "e" are shown in Table 1.

### [Preparation of Reaction Oil "f"]

A fat or oil, and glycerin as raw materials for a reaction shown in Table 1 were loaded into a 5 L four-necked flask mounted with a stirring blade (90 mm×25 mm). A transesterification reaction was performed while the addition amount of the catalyst was set to 0.20 mass% with respect to the raw materials and a reaction temperature was set to 160°C. After 4 hours from the start of the reaction, the mixture was cooled to 60°C and centrifuged at 5 000 r/min for 10 minutes. The sedimented glycerin was removed. Thus, an oil before neutralization treatment was obtained. The reaction operation was performed twice to provide a mixed oil before neutralization treatment.

300 g of the oil before neutralization treatment was loaded into a 500 mL four-necked flask mounted with a stirring blade (60 mm×20 mm). The temperature of the oil was increased to 90°C while the oil was stirred at 400 r/min. After that, 0.88 g of 85.8% phosphoric acid (moles of phosphoric acid/moles of calcium hydroxide=0.90) was added to the oil, and the mixture was stirred for 30 minutes to be neutralized. After that, the mixture was cooled to 60°C and centrifuged at 5 000 r/min for 10 minutes. The sedimented catalyst was removed. Thus, a reaction oil "f" was obtained. The analysis results of the reaction oil "f" are shown in Table 1.

### [Preparation of Reaction Oil "g"]

Neutralization treatment was performed under the same conditions as those for the reaction oil "f" except that 0.98 g of 85.8% phosphoric acid (moles of phosphoric acid/moles of calcium hydroxide=1.00) was added. Thus, a reaction oil "g" was obtained. The analysis results of the reaction oil "g" are shown in Table 1.

**Table 1**

| | | | | Reaction oil | | | | | | |
|---|---|---|---|---|---|---|---|---|---|---|
| | | | | a | b | c | d | e | f | 9 |
| Reaction raw materials | Fat or oil | Kind | [-] | Linseed oil*¹ | ← | ← | ← | ← | ← | ← |
| | | Blending amount | [g] | 1,986.6 | 331.1 | 662.2 | 1,047.4 | 662.2 | 2,317.7 | ← |
| | Glycerin*² | Blending amount | [g] | 413.4 | 68.9 | 137.8 | 152.6 | 137.8 | 482.3 | ← |
| | Fatty acid group/glycerin group (molar ratio) | | [mol/mol] | 1.00 | ← | ← | 1.25 | 1.00 | 1.00 | ← |
| | Catalyst | Kind | [-] | Calcium hydroxide*³ | ← | ← | ← | Sodium methoxide*⁴ | Calcium hydroxide | ← |
| | | Addition amount (with respect to raw materials) | [mass%] | 0.10 | ← | 0.05 | 0.15 | 0.22 | 0.2 | ← |
| Reaction conditions | Reaction temperature | | [°C | 150 | 210 | 150 | ← | 150 | 160 | ← |
| | Reaction time | | [hr] | 5 | 1 | 5 | ← | 5 | 4 | ← |
| | Pressure at time of reaction | | [Pa] | Normal pressure-nitrogen flow | ← | ← | ← | ← | ← | ← |
| | Neutralization | Molar ratio [mass%] "phosphoric acid*⁵/catalyst" | [mol/mol] | 1.5 | ← | ← | ← | ← | 0.9 | 1.0 |
| Reaction oil | Free fatty acids | | [mass%] | 0.7 | 0.9 | 0.4 | 1.5 | 1.1 | 1.7 | 1.7 |
| | Glycerin | | [mass%] | 4.2 | 4.8 | 3.7 | 3.1 | 3.3 | 4.3 | 4.1 |
| | Monoacylglycerols (MAG) | | [mass%] | 40.9 | 46.1 | 41.0 | 37.5 | 42.0 | 42.3 | 42.6 |
| | Diacylglycerols (DAG) | | [mass%] | 43.7 | 41.1 | 42.7 | 45.4 | 43.5 | 42.3 | 42.4 |
| | Triacylglycerols (TAG) | | [mass%] | 10.5 | 7.1 | 12.2 | 12.5 | 10.0 | 9.3 | 9.1 |
| | Glycidol fatty acid esters (GE) | | [mg as G/kg] | 5.5 | 40.1 | 5.2 | 4.9 | 7.3 | 2.9 | 3.3 |

| | | | | | | | | | | |
|---|---|---|---|---|---|---|---|---|---|---|
| *1: Undeodorized linseed oil (manufactured by ADM) *2: Glycerin (manufactured by Kao Corporation) *3: Calcium hydroxide (manufactured by Kanto Chemical Co., Inc.) *4: Sodium methoxide (manufactured by Fujifilm Wako Pure Chemical Corporation) *5: Phosphoric acid (manufactured by Fujifilm Wako Pure Chemical Corporation, purity: 85.8%) | | | | | | | | | | |

### [Example 1]

The reaction oil "a" was subjected to thin-film distillation with a wiped film evaporator (Model 2-03, internal diameter: 5 cm, heat transfer area: 0.03 m², manufactured by Kobelco Eco-Solutions Co., Ltd.). The operation was performed under the conditions of a heater temperature setting of 100°C, a pressure of from 1 Pa to 2 Pa, and a flow rate of 150 g/h to provide a thin-film distilled oil "a".

150 g of the thin-film distilled oil "a" was loaded into a 300 mL four-necked flask mounted with a stirring blade (60 mm×20 mm). While being stirred at 400 r/min, the oil was dehydrated under reduced pressure for 30 minutes under the conditions of 80°C and 400 Pa. After that, the temperature was increased to 110°C, and 1.5 g of activated clay (Galleon Earth V2R: manufactured by Mizusawa Industrial Chemicals, Ltd.) was added to the oil, followed by adsorbent treatment at normal pressure. Sampling was performed 10 minutes, 20 minutes, 30 minutes, 60 minutes, 90 minutes, and 120 minutes after the treatment, and the resultant samples were cooled to 70°C, followed by the separation of the activated clay by filtration. Thus, adsorbent-treated oils "a", "b", "c", "d", "e", and "f" were obtained. The composition of the thin-film distilled oil "a" and the GE content thereof 30 minutes after the adsorbent treatment are shown in Table 2, and the GE content and the composition of glycerides in each of the adsorbent-treated oils "a" to "f" are shown in Table 3.

### [Example 2]

Activated clay treatment was performed in the same manner as in Example 1 except that: the addition amount of the activated clay was set to 4.5 g; and the sampling time was set to 30 minutes. Thus, an adsorbent-treated oil was obtained. The results are shown in Table 2.

### [Example 3]

Activated clay treatment was performed in the same manner as in Example 1 except that: the temperature of the adsorbent treatment was set to 80°C; and the sampling time was set to 30 minutes. Thus, an adsorbent-treated oil was obtained. The results are shown in Table 2.

### [Comparative Example 1]

The same treatment as that in Example 1 was performed except that: no activated clay was added; and the sampling time was set to 30 minutes. Thus, a treated oil was obtained. The results are shown in Table 2.

### [Example 4]

The reaction oil "a" and 0.5 mass% of a 50% citric acid aqueous solution with respect to the reaction oil "a" were added to a 1 L four-necked flask mounted with a stirring blade (90 mm×25 mm), and the mixture was stirred at 300 r/min for 30 minutes at 70°C under a nitrogen atmosphere. After that, 100 mass% of distilled water with respect to the reaction oil "a" was added to the mixture, and the whole was stirred at 300 r/min for 10 minutes at 70°C under a nitrogen atmosphere, and centrifuged at 3 000 r/min for 10 minutes. The sedimented aqueous phase was removed. The water washing operation was repeated three times, and the mixture was dehydrated at 70°C for 30 minutes at 300 r/min under a pressure of 400 Pa or less, followed by the returning of the pressure to normal pressure with nitrogen. Thus, a water-washed oil "a" was obtained.

Activated clay treatment was performed in the same manner as in Example 1 except that: the water-washed oil "a" was used; and the sampling time was set to 30 minutes. Thus, an adsorbent-treated oil was obtained. The composition of the water-washed oil "a" and the results of the adsorbent treatment are shown in Table 2.

### [Comparative Example 2]

Activated clay treatment was performed in the same manner as in Example 1 except that: the raw material oil to be treated was changed to the reaction oil "a"; and the sampling time was set to 30 minutes. Thus, an adsorbent-treated oil was obtained. The results are shown in Table 2.

### [Example 5]

The reaction oil "b" was subjected to thin-film distillation under the same conditions as those in Example 1 to provide a thin-film distilled oil "b".

Next, the thin-film distilled oil "b" was subjected to activated clay treatment in the same manner as in Example 1, and sampling was performed after 30 minutes. Thus, an adsorbent-treated oil was obtained. The composition of the thin-film distilled oil "b" and the results of the adsorbent treatment are shown in Table 2.

### [Example 6]

The reaction oil "c" was subjected to thin-film distillation under the same conditions as those in Example 1 to provide a thin-film distilled oil "c". The glycerin concentration of the thin-film distilled oil "c" at this time was 0.3%. Glycerin (manufactured by Kao Corporation) was added to and mixed with the thin-film distilled oil "c". Thus, a glycerin concentration-adjusted oil "a" whose glycerin concentration was adjusted to 0.6% was obtained.

Next, activated clay treatment was performed in the same manner as in Example 1, and sampling was performed after 30 minutes. Thus, an adsorbent-treated oil was obtained. The composition of the glycerin concentration-adjusted oil "a" and the results of the adsorbent treatment are shown in Table 2.

### [Example 7]

Glycerin (manufactured by Kao Corporation) was added to the thin-film distilled oil "c". Thus, a glycerin concentration-adjusted oil "b" whose glycerin concentration was adjusted to 1.0% was obtained. Next, activated clay treatment was performed in the same manner as in Example 1, and sampling was performed after 30 minutes. Thus, an adsorbent-treated oil was obtained. The composition of the glycerin concentration-adjusted oil "b" and the results of the adsorbent treatment are shown in Table 2.

### [Example 8]

The reaction oil "d" was subjected to thin-film distillation under the same conditions as those in Example 1 to provide a thin-film distilled oil "d".

Next, the thin-film distilled oil "d" was subjected to activated clay treatment in the same manner as in Example 1, and sampling was performed after 30 minutes. Thus, an adsorbent-treated oil was obtained. The composition of the thin-film distilled oil "d" and the results of the adsorbent-treated oil are shown in Table 2.

### [Example 9]

The reaction oil "f" was treated under the same conditions as those in Example 1 except that the flow rate of the thin-film distillation was set to 100 g/h. Thus, a thin-film distilled oil "f" was obtained.

Next, the thin-film distilled oil "f" was subjected to activated clay treatment in the same manner as in Example 1, and sampling was performed after 30 minutes. Thus, an adsorbent-treated oil was obtained. The composition of the thin-film distilled oil "f" and the results of the adsorbent-treated oil are shown in Table 2.

### [Example 10]

The reaction oil "g" was subjected to acid treatment and water washing under the same conditions as those in Example 4 to provide a water-washed oil "b".

Next, the water-washed oil "b" was subjected to activated clay treatment in the same manner as in Example 1, and sampling was performed after 30 minutes. Thus, an adsorbent-treated oil was obtained. The composition of the water-washed oil "b" and the results of the adsorbent-treated oil are shown in Table 2.

### [Example 11]

The reaction oil "e" was subjected to thin-film distillation under the same conditions as those in Example 1 to provide a thin-film distilled oil "e".

Next, the thin-film distilled oil "e" was subjected to activated clay treatment in the same manner as in Example 1, and sampling was performed after 30 minutes. Thus, an adsorbent-treated oil was obtained. The composition of the thin-film distilled oil "e" and the results of the adsorbent treatment are shown in Table 4.

### [Comparative Example 3]

The reaction oil "e" was subjected to activated clay treatment in the same manner as in Example 1, and sampling was performed after 30 minutes. Thus, an adsorbent-treated oil was obtained. The results are shown in Table 4.

**Table 2**

| | | | | Example | | | | | | | | | | Comparative Example | |
|---|---|---|---|---|---|---|---|---|---|---|---|---|---|---|---|
| | | | | 1 | 2 | 3 | 4 | 5 | 6 | 7 | 8 | 9 | 10 | 1 | 2 |
| Deglyc eroliz ation treatm ent | Reaction oil subjected to deglycerolization | | | React ion oil "a" | ← | ← | ← | Reaction oil "b" | Reaction oil "c" | ← | Reaction oil "d" | Reaction oil "f" | Reacti on oil "g" | Reaction oil "a" | - |
| | Deglycerolization method | | [-] | Disti llati on | - | - | Distillation →water washing | Distilla tion | - | ← | ← | ← | Distil lation →water washin 9 | Distilla tion | - |
| | Disti llati on | Temperature | [°C] | 100 | ← | ← | - | 100 | - | ← | ← | ← | - | 100 | |
| | | Flow rate | [g/H] | 150 | ← | ← | | 150 | - | ← | ← | 100 | | 150 | |
| | | Pressure | [Pa] | 1 to 2 | ← | ← | | 1 to 2 | ← | ← | ← | ← | | 1 to 2 | |
| | Acid treat ment | 50% citric acid aqueous solution | [mass%] | - | - | - | 0.5 | - | - | - | - | - | 0.5 | - | - |
| | | Temperature | [°C] | | | | 70 | | | | | | 70 | | |
| | | Time | [h] | | | | 0.5 | | | | | | 0.5 | | |
| | Water washi ng | Addition amount of water | [mass%] | - | - | - | 100 | - | - | - | - | - | 100 | - | - |
| | | Temperature | [°C] | | | | 70 | | | | | | 70 | | |
| | | Time | [h] | | | | 0.5 | | | | | | 0.5 | | |
| | | Number of times | [-] | | | | 3 | | | | | | 3 | | |
| Adsorb ent treatm ent | Deglycerinized oil or reaction oil subjected to adsorption treatment | | | Thin-film disti lled oil "a" | ← | ← | Water-washed oil "a" | Thin-film distille d oil "b" | Glycerin concentr ation-adjusted oil "a" | Gly cer in con cen tra tio n-adj ust ed oil "b" | Thin-film distille d oil "d" | Thin-film distille d oil "f" | Water-washed oil "b" | Thin-film distille d oil "a" | Re ac ti on oi l "a " |
| | Compo sitio | Free fatty acids | [mass%] | 0.7 | ← | - | 0.6 | 0.9 | 0.4 | 0.4 | 1.1 | 1.6 | 1.7 | 0.7 | 0. 7 |
| | n of fat or oil befor e treat ment | Glycerin | [mass%] | 0.2 | ← | ← | 0.0 | 0.2 | 0.6 | 1.0 | 0.2 | 0.3 | 0.0 | 0.2 | 4. 2 |
| | | Monoacylglyc erols (MAG) | [mass%] | 42. 6 | ← | ← | 42.8 | 48.4 | 42.5 | 42. 2 | 39.7 | 44.4 | 42.8 | 42.6 | 40 .9 |
| | | Diacylglycer ols (DAG) | [mass%] | 45.6 | ← | ← | 45.6 | 43.1 | 44.2 | 43. 9 | 47.7 | 44.1 | 45.7 | 45.6 | 43 .7 |
| | | Triacylglyce rols (TAG) | [mass%] | 10.9 | ← | ← | 11.0 | 7.4 | 12.6 | 12. 5 | 11.2 | 9.6 | 9.7 | 10.9 | 10 .5 |
| | | Glycidol fatty acid esters (GE) | [mg as G/kg] | 4.8 | ← | ← | 4.4 | 38.2 | 5.0 | 5.0 | 4.6 | 2.7 | 2.5 | 4.8 | 5. 5 |
| | Treat ment condi tions | Temperature | [°C] | 110 | 11 0 | 80 | 110 | 110 | 110 | ← | ← | ← | ← | 110 | 11 0 |
| | | Time | [h] | 0.5 | 0. 5 | 0. 5 | 0.5 | 0.5 | 0.5 | ← | ← | ← | ← | 0.5 | 0. 5 |
| | | Pressure | [Pa] | Norma l press ure | No rm al pr es su re | No rm al pr es su re | Normal pressure | Normal pressure | Normal pressure | ← | ← | ← | ← | Normal pressure | No rm al pr es su re |
| | | Activated clay | [mass%] | 1.0 | 3. 0 | 1. 0 | 1.0 | 1.0 | 1.0 | 1.0 | 1.0 | 1.0 | 1.0 | - | 1. 0 |
| | Adsor bent-treat ed oil | Glycidol fatty acid esters (GE) | [mg as G/kg] | 0.1 | 0. 1 | 0. 1 | 0.1 | 0.1 | 0.3 | 0.4 | 0.2 | 0.07 | 0.04 | 4.5 | 0. 5 |

**Table 3**

| Sample name | Treatment time [min] | Glycidol fatty acid esters (GE) [mg as G/kg] | Glyceride composition [%] | | | | | DAG increase amount in adsorbent treatment [%] |
|---|---|---|---|---|---|---|---|---|
| | | | FFA | GLY | MAG | DAG | TAG | |
| Thin-film distilled oil "a" | 0 | 4.8 | 0.7 | 0.2 | 42.6 | 45.6 | 10.9 | - |
| Example 1 adsorbent-treated oil "a" | 10 | 0.6 | 0.7 | 0.5 | 39.4 | 48.4 | 11.0 | 2.8 |
| Example 1 adsorbent-treated oil "b" | 20 | 0.1 | 0.7 | 0.7 | 37.5 | 50.0 | 11.0 | 4.4 |
| Example 1 adsorbent-treated oil "c" | 30 | 0.1 | 0.7 | 0.9 | 36.1 | 51.2 | 11.0 | 5.6 |
| Example 1 adsorbent-treated oil "d" | 60 | 0.1 | 0.7 | 1.2 | 34.0 | 53.0 | 11.1 | 7.4 |
| Example 1 adsorbent-treated oil "e" | 90 | 0.1 | 0.7 | 1.3 | 32.5 | 54.4 | 11.0 | 8.8 |
| Example 1 adsorbent-treated oil "f" | 120 | 0.1 | 0.8 | 1.3 | 31.8 | 55.1 | 11.0 | 9.5 |

**Table 4**

| | | | | Example | Comparative Example |
|---|---|---|---|---|---|
| | | | | 11 | 3 |
| Deglycerolization treatment | Reaction oil subjected to deglycerolization treatment | | | Reaction oil "e" | - |
| | Deglycerolization method | | [-] | Distillation | - |
| | Distillation | Temperature | [°C] | 100 | |
| | | Flow rate | [g/h] | 150 | |
| | | Pressure | [Pa] | 1 to 2 | |
| | Acid treatment | 50% citric acid aqueous solution | [mass%] | - | - |
| | | Temperature | [°C] | | |
| | | Time | [h] | | |
| | Water washing | Addition amount of water | [mass%] | - | - |
| | | Temperature | [°C] | | |
| | | Time | [h] | | |
| | | Number of times | [-] | | |
| Adsorbent treatment | Deglycerinized oil or reaction oil subjected to adsorption treatment | | | Thin-film distilled oil "e" | Reaction oil "e" |
| | Composition of fat or oil before treatment | Free fatty acids | [mass%] | 1.1 | 1.1 |
| | | Glycerin | [mass%] | 0.3 | 3.3 |
| | | Monoacylglycerols (MAG) | [mass%] | 43.5 | 42.0 |
| | | Diacylglycerols (DAG) | [mass%] | 44.9 | 43.5 |
| | | Triacylglycerols (TAG) | [mass%] | 10.2 | 10.0 |
| | | Glycidol fatty acid esters (GE) | [mg as G/kg] | 6.7 | 7.3 |
| | Treatment conditions | Temperature | [°C] | 110 | 110 |
| | | Time | [h] | 0.5 | 0.5 |
| | | Pressure | [Pa] | Normal pressure | Normal pressure |
| | | Activated clay | [mass%] | 1.0 | 1.0 |
| | Adsorbent-treated oil | Glycidol fatty acid esters (GE) | [mg as G/kg] | 0.1 | 5.0 |

As apparent from Tables 2 to 4, it found that regardless of how the concentration of the glycerin dissolved in the reaction oil was changed by different reaction conditions, when the reaction oil after the transesterification reaction was subjected to adsorbent treatment after a reduction in glycerin concentration by distillation or water washing, a fat or oil having a low glycidol fatty acid ester concentration in the adsorbent-treated oil was obtained (Examples 1 to 5 and 8 to 11). Further, it was found that, when neutralization was performed with a neutralizer in an equimolar amount to the added chemical catalyst after the completion of the transesterification reaction, a fat or oil having a lower glycidol fatty acid ester concentration was obtained (Examples 9 and 10). Meanwhile, it was found that, when the reaction oil was directly subjected to adsorbent treatment, or when an adsorbent such as activated clay was not added even when deglycerolization treatment was performed, glycidol fatty acid esters were not reduced (Comparative Examples 1, 2, and 3). In addition, as a result of the performance of adsorbent treatment by adding glycerin to the thin-film distilled oil obtained by distilling the reaction oil to adjust its glycerin concentration, it was found that, as the glycerin concentration of the fat or oil before the adsorbent treatment became lower, a fat or oil having a lower concentration of the glycidol fatty acid esters was obtained (Examples 6 and 7).

### [Example 12]

Activated clay treatment was performed in the same manner as in Example 1 except that: the addition amount of the activated clay was set to 4.5 g; and the sampling time was set to 120 minutes. Thus, an adsorbent-treated oil was obtained.

### [Example 13]

Activated clay treatment was performed in the same manner as in Example 1 except that: the temperature of the adsorbent treatment was set to 80°C; and the sampling time was set to 120 minutes. Thus, an adsorbent-treated oil was obtained.

### [Comparative Example 4]

Activated clay treatment was performed in the same manner as in Example 1 except that: no activated clay was added; and the sampling time was set to 120 minutes. Thus, a treated oil was obtained.

The results of Example 1, 120 minutes after the adsorbent treatment, and the results of Examples 12 and 13, and Comparative Example 4 are shown in Table 5.

### [Example 14]

The reaction oil "a" and 0.5 mass% of a 50% citric acid aqueous solution with respect to the reaction oil "a" were added to a 1 L four-necked flask mounted with a stirring blade (90 mm×25 mm), and the mixture was stirred at 300 r/min for 30 minutes at 70°C under a nitrogen atmosphere. After that, 100 mass% of distilled water with respect to the reaction oil "a" was added to the mixture, and the whole was stirred at 300 r/min for 10 minutes at 70°C under a nitrogen atmosphere, and centrifuged at 3 000 r/min for 10 minutes. The sedimented aqueous phase was removed. The water washing operation was repeated three times, and the mixture was dehydrated at 70°C for 30 minutes at 300 r/min under a pressure of 400 Pa or less, followed by the returning of the pressure to normal pressure with nitrogen. Thus, a water-washed oil "a" was obtained.

Activated clay treatment was performed in the same manner as in Example 1 except that: the water-washed oil "a" was used; and the sampling time was set to 120 minutes. Thus, an adsorbent-treated oil was obtained. The compositions of the water-washed oil "a" and the adsorbent-treated oil are shown in Table 5.

### [Comparative Example 5]

Activated clay treatment was performed in the same manner as in Example 1 except that: the raw material oil to be treated was changed to the reaction oil "a"; and the sampling time was set to 120 minutes. Thus, an adsorbent-treated oil was obtained. The results are shown in Table 5.

### [Example 15]

The reaction oil "b" was subjected to thin-film distillation under the same conditions as those in Example 1 to provide a thin-film distilled oil "b". Next, activated clay treatment was performed in the same manner as in Example 1, and sampling was performed after 120 minutes. Thus, an adsorbent-treated oil was obtained. The compositions of the thin-film distilled oil "b" and the adsorbent-treated oil are shown in Table 5.

### [Example 16]

The reaction oil "e" was subjected to thin-film distillation under the same conditions as those in Example 1 to provide a thin-film distilled oil "e". Next, the thin-film distilled oil "e" was subjected to activated clay treatment in the same manner as in Example 1, and sampling was performed after 120 minutes. Thus, an adsorbent-treated oil was obtained. The compositions of the thin-film distilled oil "e" and the adsorbent-treated oil are shown in Table 5.

### [Comparative Example 6]

Activated clay treatment was performed in the same manner as in Example 1 except that: the raw material oil to be treated was changed to the reaction oil "e"; and the sampling time was set to 120 minutes. Thus, an adsorbent-treated oil was obtained. The results are shown in Table 5.

### [Example 17]

The reaction oil "c" was subjected to thin-film distillation under the same conditions as those in Example 1 to provide a thin-film distilled oil "c". The glycerin concentration of the thin-film distilled oil "c" was 0.3%. Next, glycerin (manufactured by Kao Corporation) was added to and mixed with the thin-film distilled oil "c". Thus, a glycerin concentration-adjusted oil "a" whose glycerin concentration was adjusted to 0.6% was obtained. Next, activated clay treatment was performed in the same manner as in Example 1, and sampling was performed after 120 minutes. Thus, an adsorbent-treated oil was obtained. The compositions of the glycerin concentration-adjusted oil "a" and the adsorbent-treated oil are shown in Table 5.

### [Example 18]

Glycerin (manufactured by Kao Corporation) was added to and mixed with the thin-film distilled oil "c". Thus, a glycerin concentration-adjusted oil "b" whose glycerin concentration was adjusted to 1.0% was obtained. Next, activated clay treatment was performed in the same manner as in Example 1, and sampling was performed after 120 minutes. Thus, an adsorbent-treated oil was obtained. The compositions of the glycerin concentration-adjusted oil "b" and the adsorbent-treated oil are shown in Table 5.

### [Example 19]

Glycerin (manufactured by Kao Corporation) was added to and mixed with the thin-film distilled oil "c". Thus, a glycerin concentration-adjusted oil "c" whose glycerin concentration was adjusted to 1.6% was obtained. Next, activated clay treatment was performed in the same manner as in Example 1, and sampling was performed after 120 minutes. Thus, an adsorbent-treated oil was obtained. The compositions of the glycerin concentration-adjusted oil "c" and the adsorbent-treated oil are shown in Table 5.

### [Example 20]

200 g of the reaction oil "a" was loaded into a Claisen flask and deodorized for 1 hour under the conditions of a temperature of 130°C, a pressure of 400 Pa, and a steam amount of 3%/h. Thus, a deodorized oil "a" was obtained. Next, activated clay treatment was performed in the same manner as in Example 1, and sampling was performed after 120 minutes. Thus, an adsorbent-treated oil was obtained. The compositions of the deodorized oil "a" and the adsorbent-treated oil are shown in Table 5.

### [Example 21]

200 g of the reaction oil "a" was loaded into a Claisen flask and deodorized for 1 hour under the conditions of a temperature of 200°C, a pressure of 400 Pa, and a steam amount of 3%/h. Thus, a deodorized oil "b" was obtained. Next, activated clay treatment was performed in the same manner as in Example 1, and sampling was performed after 120 minutes. Thus, an adsorbent-treated oil was obtained. The compositions of the deodorized oil "b" and the adsorbent-treated oil are shown in Table 5.

### [Example 22]

The reaction oil "d" was subjected to thin-film distillation under the same conditions as those in Example 1 to provide a thin-film distilled oil "d".

Next, the thin-film distilled oil "d" was subjected to activated clay treatment in the same manner as in Example 1, and sampling was performed after 120 minutes. Thus, an adsorbent-treated oil was obtained. The composition of the thin-film distilled oil "d" and the results of the adsorbent-treated oil are shown in Table 5.

### [Comparative Example 7]

Activated clay treatment was performed in the same manner as in Example 1 except that: the raw material oil to be treated was changed to the reaction oil "d"; and the sampling time was set to 120 minutes. Thus, an adsorbent-treated oil was obtained. The results are shown in Table 5.

**Table 5**

| | | | | Example | | | | | | | | | | | | Comparative Example | | | |
|---|---|---|---|---|---|---|---|---|---|---|---|---|---|---|---|---|---|---|---|
| | | | | 1 | 12 | 13 | 14 | 15 | 16 | 17 | 18 | 19 | 20 | 21 | 22 | 4 | 5 | 6 | 7 |
| Reaction oil subjected to deglycerolization treatment | | | | Reacti on oil "a" | ← | ← | ← | Reaction oil "b" | Reaction oil "e" | Reactio n oil "c" | ← | ← | Reactio n oil "a" | ← | Reaction oil "d" | Reaction oil "a" | - | - | - |
| Degl ycer oliz atio n trea tmen t | Deglycerolization method | | [-] | Distil lation | ← | ← | Acid treatmen t-water washing | Distilla tion | ← | ← | ← | ← | Deodori zation | ← | Distilla tion | Distillation | - | - | - |
| | Distil lation | Temperature | [°C] | 100 | ← | ← | - | 100 | ← | ← | ← | ← | - | - | 100 | 100 | - | - | - |
| | | Flow rate | [g/h] | 150 | ← | ← | | 150 | ← | ← | ← | ← | | | 150 | 150 | | | |
| | | Pressure | [Pa] | 1 to 2 | ← | ← | | 1 to 2 | ← | ← | ← | ← | | | 1 to 2 | Less than 2 | | | |
| | Acid treatm ent | 50% citric acid aqueous solution | [%] | - | - | - | 0.5 | - | - | - | - | - | - | - | - | - | - | - | - |
| | | Temperature | [°C] | | | | 70 | | | | | | | | | | | | |
| | | Time | [h] | | | | 0.5 | | | | | | | | | | | | |
| | Water washin 9 | Addition amount of water | [%] | - | - | - | 100 | - | - | - | - | - | - | - | - | - | - | - | - |
| | | Temperature | [°C] | | | | 70 | | | | | | | | | | | | |
| | | Time | [min] | | | | 10 | | | | | | | | | | | | |
| | | Number of times | [-] | | | | 3 | | | | | | | | | | | | |
| | Deodor izatio n | Temperature | [°C] | - | - | - | - | - | - | - | - | - | 130 | 200 | - | - | - | - | - |
| | | Time | [h] | | | | | | | | | | 1 | 1 | | | | | |
| | | Pressure | [Pa] | | | | | | | | | | 400 | 400 | | | | | |
| | | Amount of steam | [%/h] | | | | | | | | | | 3 | 3 | | | | | |
| Adso rben t | Deglycerinized oil or reaction oil subjected to | | [-] | Thin-film distil | ← | ← | Water-washed oil "a" | Thin-film distille | Thin-film distille | Glyceri n concent | Glyce rin conce | Glyc erin conc | Deodori zed oil "a" | Deodori zed oil "b" | Thin-film distille | Thin-film distilled oil "a" | React ion oil | React ion oil | Reac tion oil |
| trea tmen t | adsorption treatment | | | led oil "a" | | | | d oil "b" | d oil "e" | ration-adjuste d oil "a" | ntrat ion-adjus ted oil "b" | entr atio n-adju sted oil "c" | | | d oil "d" | | "a" | "e" | "d" |
| | Compos ition of fat or oil before treatm ent (a) | Free fatty acids | [%] | 0.7 | ← | ← | 0.6 | 0.9 | 1.1 | 0.4 | 0.4 | 0.4 | 0.8 | 0.0 | 1.1 | 0.7 | 0.7 | 1.1 | 1.5 |
| | | Glycerin | [%] | 0.2 | ← | ← | 0.0 | 0.2 | 0.3 | 0.6 | 1.0 | 1.6 | 0.3 | 0.0 | 0.2 | 0.2 | 4.2 | 3.3 | 3.1 |
| | | Monoacylglyce rols (MAG) | [%] | 42.6 | ← | ← | 42.8 | 48.4 | 43.5 | 42.5 | 42.2 | 42.3 | 41.4 | 36.4 | 39.7 | 42.6 | 40.9 | 42.0 | 37.5 |
| | | Diacylglycero ls (DAG) (a) | [%] | 45.6 | ← | ← | 45.6 | 43.1 | 44.9 | 44.2 | 43.9 | 43.1 | 46.2 | 49.9 | 47.7 | 45.6 | 43.7 | 43.5 | 45.4 |
| | | Triacylglycer ols (TAG) | [%] | 10.9 | ← | ← | 11.0 | 7.4 | 10.2 | 12.6 | 12.5 | 12.6 | 11.3 | 13.6 | 11.2 | 10.9 | 10.5 | 10.0 | 12.5 |
| | | Glycidol fatty acid esters (GE) | [mg as G/kg] | 4.8 | ← | ← | 4.4 | 38.2 | 6.7 | 5.0 | 5.0 | 5.0 | 4.5 | 77.5 | 6.7 | 4.8 | 5.5 | 7.3 | 4.9 |
| | Treatm ent condit ions | Temperature | [°C] | 110 | ← | 80 | 110 | ← | ← | ← | ← | ← | ← | ← | ← | ← | ← | ← | ← |
| | | Time | [min] | 120 | ← | ← | ← | ← | ← | ← | ← | ← | ← | ← | ← | ← | ← | ← | ← |
| | | Pressure | [Pa] | Normal pressu re | ← | ← | ← | ← | ← | ← | ← | ← | ← | ← | ← | ← | ← | ← | ← |
| | | Activated clay | [%] | 1.0 | 3.0 | 1.0 | 1.0 | 1.0 | 1.0 | 1.0 | 1.0 | 1.0 | 1.0 | 1.0 | 1.0 | 0.0 | 1.0 | 1.0 | 1.0 |
| | Compos ition of adsorb ent-treate d oil (b) | Free fatty acids | [%] | 0.8 | 0.9 | 0.7 | 0.7 | 0.3 | 1.1 | 0.4 | 0.5 | 0.5 | 0.9 | 0.1 | 1.1 | 0.7 | 0.7 | 1.1 | 1.3 |
| | | Glycerin | [%] | 1.3 | 1.3 | 1.0 | 1.1 | 1.7 | 1.0 | 1.6 | 2.1 | 1.0 | 0.9 | 0.5 | 1.3 | 0.2 | 3.8 | 2.9 | 2.9 |
| | | Monoacylglyce rols (MAG) | [%] | 31.8 | 29. 7 | 35.4 | 33.1 | 34.1 | 36.3 | 32.5 | 35.4 | 38.7 | 36.2 | 31.2 | 28.2 | 42.3 | 39.8 | 42.0 | 35.6 |
| | | Diacylglycero ls (DAG) (b) | [%] | 55.1 | 57. 0 | 52.0 | 54.3 | 56.2 | 51.3 | 52.9 | 49.9 | 46.8 | 50.5 | 55.2 | 56.0 | 45.8 | 45.1 | 44.0 | 47.5 |
| | | Triacylglycer ols (TAG) | [%] | 11.0 | 11. 2 | 10.9 | 10.7 | 7.6 | 10.4 | 13.0 | 12.6 | 13.5 | 11.5 | 12.9 | 13.3 | 11.0 | 10.6 | 10.0 | 12.8 |
| | | DAG increase amount (b)-(a) | [%] | 9.5 | 11. 4 | 6.4 | 8.7 | 13.1 | 6.4 | 8.7 | 6.0 | 3.7 | 4.3 | 5.4 | 8.3 | 0.2 | 1.3 | 0.5 | 2.1 |
| | | Glycidol fatty acid esters (GE) | [mg as G/kg] | 0.1 | 0.1 | 0.1 | 0.1 | 0.1 | 0.1 | 0.1 | 0.1 | 0.1 | 0.1 | 0.1 | 0.1 | 4.3 | 0.4 | 3.4 | 0.5 |

As apparent from Table 5, it was found that regardless of how the concentration of the glycerin dissolved in the reaction oil was changed by different reaction conditions, when the glycerin concentration was reduced by the distillation, water washing, or deodorization of the reaction oil after the transesterification reaction, and subsequently adsorbent treatment was performed for a long time, in addition to the low glycidol fatty acid ester concentration in the adsorbent-treated oil, the amount of triacylglycerols did not change, the amount of monoacylglycerols decreased, and the amount of diacylglycerols increased efficiently (Examples 1 and 12 to 22). Meanwhile, it was found that, when the reaction oil was directly subjected to adsorbent treatment, or when no activated clay was added even when deglycerolization treatment was performed, there was no change in composition of glycerides (Comparative Examples 4 to 7). In addition, as a result of the performance of adsorbent treatment by adding glycerin to the thin-film distilled oil obtained by distilling the reaction oil to adjust its glycerin concentration, it was found that, as the glycerin concentration of the fat or oil before the adsorbent treatment became lower, the amount of diacylglycerols increased in the adsorbent treatment became larger (Examples 17 to 19).

## Claims

1. A method of producing a transesterified fat or oil, the method comprising:
subjecting a fat or oil, and glycerin to a transesterification reaction;
subsequently performing treatment of reducing the glycerin dissolved in a reaction oil; and
then performing treatment of bringing an adsorbent into contact with a deglycerinized oil.

2. The method of producing a transesterified fat or oil according to claim 1, wherein a glycerin concentration in the deglycerinized oil after the treatment of reducing the glycerin dissolved in the reaction oil is 3.0 mass% or less.

3. The method of producing a transesterified fat or oil according to claim 1 or 2, wherein a ratio of the number of moles of a fatty acid group to the number of moles of a glycerin group, [FA/GLY], when the transesterification reaction between the fat or oil, and the glycerin is performed is 2.0 or less.

4. The method of producing a transesterified fat or oil according to any one of claims 1 to 3, wherein the adsorbent is one or more selected from the group consisting of solid acid adsorbents.

5. The method of producing a transesterified fat or oil according to any one of claims 1 to 4, wherein the adsorbent is one or more selected from the group consisting of acid clay and activated clay.

6. The method of producing a transesterified fat or oil according to any one of claims 1 to 5, wherein the adsorbent is brought into contact with the deglycerinized oil in an amount of 10 mass% or less.

7. The method of producing a transesterified fat or oil according to any one of claims 1 to 6, wherein the treatment of bringing the adsorbent into contact with the deglycerinized oil is performed for 20 minutes or more.
